# EUROPÄISCHE PATENTSCHRIFT

(11) **EP 1 954 972 B1**
(45) Veröffentlichungstag und Bekanntmachung des Hinweises auf die Patenterteilung: **28.07.2010**
(21) Anmeldenummer: 06792170.0
(22) Anmeldetag: 20.09.2006
(51) Int. Cl.: F16N 13/00, F16N 13/10, F16N 13/14, F16N 7/38

(54) **FÖRDERPUMPE UND MODULARES PUMPENSYSTEM**
FEED PUMP AND MODULAR PUMP SYSTEM
POMPE D'ALIMENTATION ET SYSTEME DE POMPE MODULAIRE

(30) Priorität: 30.11.2005 DE 202005018630 U
(43) Veröffentlichungstag der Anmeldung: 13.08.2008
(73) Patentinhaber: Lincoln GmbH, 69190 Walldorf (DE)
(72) Erfinder: PALUNCIC, Zdravko, 67067 Ludwigshafen (DE)
(74) Vertreter: KEIL & SCHAAFHAUSEN Patentanwälte
(86) Internationale Anmeldenummer: PCT/EP2006/009129
(87) Internationale Veröffentlichungsnummer: WO 2007/062705

(56) Entgegenhaltungen:
- EP-A1- 0 493 982
- EP-A1- 1 275 895
- US-A1- 5 725 071
- US-A1- 2002 144 865

## Beschreibung

Die Erfindung betrifft eine Förderpumpe für die Zufuhr von Schmierstoff an wenigstens eine Schmierstelle, mit wenigstens einem Antriebsmodul und wenigstens einem Pumpenmodul. Weiter betrifft die Erfindung ein modulares Pumpensystem für eine derartige Förderpumpe.

Förderpumpen für die Zufuhr von Schmierstoff, beispielsweise Schmierfett oder Öl, weisen üblicherweise ein zum Beispiel durch einen Förderkolben gebildetes Pumpenelement, welches den Schmierstoff zu einer Schmierstelle fördert, und ein diesem Pumpenelement zugeordnetes Antriebselement auf, mit welchem das Pumpenelement betätigbar ist. So ist aus der US 6,736,292 B2 eine Fettpumpe bekannt, bei welcher ein pneumatisch betätigbares als Kolben ausgebildetes Antriebselement in einem gemeinsamen Gehäuse mit einem von einem Förderkolben gebildeten Pumpenelement angeordnet ist. Falls das Pumpenelement und/oder das Antriebselement aufgrund eines Defekts ausgetauscht werden muss, kann dies immer nur durch ein speziell hierfür geeignetes Pumpenelement bzw. Antriebselement erfolgen. Es ist daher erforderlich, für verschiedene Förderpumpen speziell auf diese abgestimmte Ersatzteile vorzuhalten. Auch sind derartigen Förderpumpen auf eine bestimmte Antriebsart, z.B. aufgrund des pneumatisch oder hydraulisch betriebenen Antriebselements festgelegt und nicht ohne weiteres z.B. mechanisch und/oder elektrisch antreibbar. Auch sind die bekannten Förderpumpen hinsichtlich ihrer Auslegung auf einen bestimmten Schmierstoff festgelegt.

Das EP 1 275 895 A1 offenbart ein modulares

Pumpensystem.

Aufgabe der vorliegenden Erfindung ist es demgegenüber, eine Förderpumpe sowie ein modulares Pumpensystem für eine derartige Förderpumpe zu schaffen, welche sowohl hinsichtlich ihrer Antriebsart als auch hinsichtlich der Schmierstoffe variabel einsetzbar sind. Auch sollen einzelne Komponenten der Förderpumpe zur Umrüstung auf andere Einsatzbedingungen und/oder zu Reparaturzwecken mit geringem Aufwand austauschbar sein.

Diese Aufgabe wird erfindungsgemäß im Wesentlichen durch eine Förderpumpe mit wenigstens einem Antriebsmodul und wenigstens einem Pumpenmodul gelöst, bei welcher jedes Antriebsmodul und jedes Pumpenmodul aus einem modularen System gewählt ist, das mehrere Antriebsmodule und/oder mehrere Pumpenmodule umfasst, die jeweils wenigstens einen Anschlussbereich aufweisen, wobei die Anschlussbereiche derart aneinander angepasst sind, dass das wenigstens eine Antriebsmodul gegen wenigstens ein weiteres Antriebsmodul und/oder das wenigstens eine Pumpenmodul gegen wenigstens ein weiters Pumpenmodul austauschbar ist. Die modulare Bauweise der erfindungsgemäßen Pumpe ermöglicht es damit, die modulartigen Komponenten der Pumpe leicht gegen andere oder gleiche Komponenten auszutauschen. So ist eine rasche Umrüstung der Pumpe mit verschiedenen Antriebsmodulen oder das Austauschen von Pumpenmodulen möglich. Zudem kann in Abhängigkeit der Einsatzbedingungen die Anzahl der Pumpenmodule an einem Antriebsmodul vergrößert oder verkleinert werden. Um dieser Austauschbarkeit der Module zu erleichtern, weist jedes der Module wenigstens einen Anschlussbereich auf, der an die Anschlussbereiche der übrigen Module angepasst ist.

So wird es bevorzugt, wenn die Anschlussbereiche jeweils wenigstens eine Bohrung zur lösbaren Verbindung eines Antriebsmoduls und eines Pumpenmoduls über eine Verschraubung aufweisen. Eine besonders sichere Verbindung der einzelnen Module kann dadurch erreicht werden, dass die Module mit insgesamt vier Verschraubungen aneinander befestigt werden. Die Bohrungen in den Anschlussbereichen sind dabei derart gestaltet, dass in den Pumpenmodulen Durchgangsbohrungen zur Aufnahme und Durchführung von Schrauben vorgesehen sind, während in den Antriebsmodulen Gewindebohrungen vorgesehen sind. Die Pumpenmodule lassen sich auf diese Weise leicht an den Antriebsmodulen festschrauben.

Weiter ist erfindungsgemäß vorgesehen, dass die Anschlussbereiche jeweils eine weitere Bohrung zur Aufnahme und/oder Durchführung eines Kolbens oder einer Kolbenanordnung aufweisen. Die Pumpenmodule können dabei mit einer Förderkolbenanordnung ausgestattet sein, die zumindest teilweise aus dem Anschlussbereich jedes Pumpenmoduls hervorsteht und in die entsprechende Bohrung eines Antriebsmoduls einführbar ist, um dort mit einem Antriebselement zur Betätigung der Kolbenanordnung in Eingriff oder in Kontakt zu gelangen. Mit anderen Worten müssen die Pumpenmodule lediglich auf ein Antriebsmodul aufgesteckt werden, wobei beispielsweise ein Kolben der aus der Bohrung des Pumpenmoduls hervorsteht in die Bohrung des Antriebsmoduls eingeführt wird, und dann an dem Pumpenmodul festgeschraubt werden. Das Auswechseln von Pumpenmodulen oder Antriebsmodulen ist auf diese Weise besonders einfach möglich.

Die Anschlussbereiche bilden erfindungsgemäß eine im Wesentlichen ebene Fläche. Dabei haben die zueinander passenden Anschlussbereiche im Wesentlichen die gleiche Größe und Gestalt. Hierdurch können Pumpen- und Antriebsmodule leicht ausgetauscht werden.

Nach einer bevorzugten Ausführungsform der Erfindung weist das Antriebsmodul ein Rotations-Linear-Umsetzungsgetriebe und einen diesem zugeordneten Elektromotor auf. Die Drehung der Motorwelle des Elektromotors wird dabei in eine lineare Bewegung zum Antrieb einer Kolbenanordnung eines Pumpenmoduls umgesetzt. In Weiterbildung dieses Gedankens ist es vorgesehen, dass dem Elektromotor eine Steuerungs- und/oder Regeleinheit zugeordnet ist. Alternativ hierzu kann das Antriebsmodul auch ein Rotations-Linear-Umsetzungsgetriebe aufweisen, welches über ein vorzugsweise aus dem Gehäuse des Antriebsmoduls herausragendes Wellenende antreibbar ist. Das Antriebsmodul kann auch eine Aufnahme zum Einführen und Anschließen eines angetriebenen Wellenendes oder dergleichen aufweisen. Bei vielen Geräten, deren Schmierstellen mit einer erfindungsgemäßen Förderpumpe mit Schmierstoff versorgt werden, sind bereits Antriebsaggregate vorhanden. Es bietet sich daher an, die Antriebsenergie dieser Aggregate auch zum Betreiben von Förderpumpen für die Zufuhr von Schmierstoff zu verwenden. Hierdurch kann auf einen zusätzlichen Elektromotor zum Antrieb einer Förderpumpe verzichtet werden.

Das Rotations-Linear-Umsetzungsgetriebe kann beispielsweise durch einen in dem Antriebsmodul drehbar gelagerten Exzenter, einen Nocken oder dergleichen gebildet sein. Grundsätzlich ist für den Einsatz in einem Antriebsmodul jede Einrichtung geeignet, die eine Rotation in eine lineare Bewegung umsetzen kann. Weiter kann durch das Rotations-Linear-Umsetzungsgetriebe und/oder durch ein weiteres Getriebe die Geschwindigkeit der Linearbewegung bei einer festgelegten Rotationsgeschwindigkeit des antreibenden Elements definiert eingestellt werden.

Nach einer weiteren Ausführungsform der Erfindung weist das Antriebsmodul eine hydraulisch und/oder pneumatisch antreibbare Kolbenanordnung auf. Der Einsatz eines derartigen Antriebsmoduls bietet sich immer dann an, wenn zum Betrieb und/oder zur Steuerung des Gerätes, welchem die Förderpumpe zugeordnet ist, ein Hydraulikfluid oder beispielsweise Druckluft bereitgestellt wird.

Die hydraulisch und/oder pneumatisch antreibbare Kolbenanordnung kann dabei mit einem in dem Antriebsmodul verschiebbar geführten doppelt wirkenden Kolben ausgestattet sein. Hierzu kann der Antriebseinheit beispielsweise ein Vierwegeventil zugeordnet sein. Alternativ ist es auch möglich, einen in dem Antriebsmodul verschiebbar geführten Kolben vorzusehen, dem eine Rückstellfeder zugeordnet ist. Der Steuerungsaufwand eines derartigen Antriebsmoduls wird dadurch reduziert.

Das Pumpenmodul einer erfindungsgemäßen Förderpumpe weist nach einer bevorzugten Ausführungsform einen verschiebbar in dem Modul gelagerten Förderkolben auf, dem eine Rückstellfeder und wenigstens ein Ventil zugeordnet ist. Durch eine Betätigung des Förderkolbens fördert dieser einen Schmierstoff, beispielsweise Öl oder Schmierfett, zu einer Schmierstelle. Durch die Kraft der Rückstellfeder wird der Förderkolben in seine in das Antriebsmodul hineinragende Stellung zurück verschoben, wenn der Förderkolben durch das Antriebsmodul nicht mehr beaufschlagt wird. Durch die Rückstellfeder kann der Förderkolben unter Vorspannung in Wirkverbindung mit einem Antriebselement des Antriebsmoduls, beispielsweise einem Exzenter, gehalten werden.

Die der Erfindung zugrunde liegende Aufgabe wird weiter durch ein modulares Pumpensystem für eine Förderpumpe gelöst, welches wenigstens zwei Antriebsmodule und wenigstens ein Pumpenmodul bzw. wenigstens ein Antriebsmodul und wenigstens zwei Pumpenmodule umfasst. Dabei weist jedes Antriebsmodul und jedes Pumpenmodul wenigstens einen Anschlussbereich auf, der derart an die Anschlussbereiche der übrigen Module angepasst ist, dass jedes Antriebsmodul gegen wenigstens ein weiteres Antriebsmodul und jedes Pumpenmodul gegen wenigstens ein weiteres Pumpenmodul austauschbar ist. Um bei Bedarf mehrere Pumpenmodule mit nur einem Antriebsmodul anzutreiben, wird es bevorzugt, wenn die Antriebsmodule mit wenigstens zwei Anschlussbereichen ausgestattet sind. So ist es beispielsweise möglich, dass jedes Antriebsmodul 2, 4 oder beispielsweise 6 Anschlussbereiche aufweist, an welche jeweils ein Pumpenmodul angekoppelt werden kann. Anschlussbereiche, an die kein Pumpenmodul angeschlossen ist, können durch einen Deckel abgedichtet verschlossen werden, um das Eindringen von Schmutz zu verhindern.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung unabhängig von ihrer Zusammenfassung in den Ansprüchen oder deren Rückbeziehung.

Es zeigen schematisch:
- Fig. 1: in Perspektivansicht eine erfindungsgemäße Förderpumpe mit ei- nem Elektromotor,
- Fig. 2: in Perspektivansicht eine erfindungsgemäße Förderpumpe mit ein- em freien Wellenende,
- Fig. 3: in Schnittansicht die Förderpumpe nach Fig. 2,
- Fig. 4: in Perspektivansicht eine weitere Ausführungsform einer Förder- pumpe mit einem freien Wellenende,
- Fig. 5: in aufgebrochener Perspektivansicht die Förderpumpe nach Fig. 4,
- Fig. 6: in Perspektivansicht eine erfindungsgemäße Förderpumpe mit hydraulisch und/pneumatisch betriebenen Antriebsmodul,
- Fig. 7: in teilweise aufgebrochener Perspektivansicht ein Antriebsmodul mit doppelt wirkender Kolbenanordnung und
- Fig. 8: in teilweise aufgebrochener Perspektivansicht ein Antriebsmodul mit einfach wirkender Kolbenanordnung.

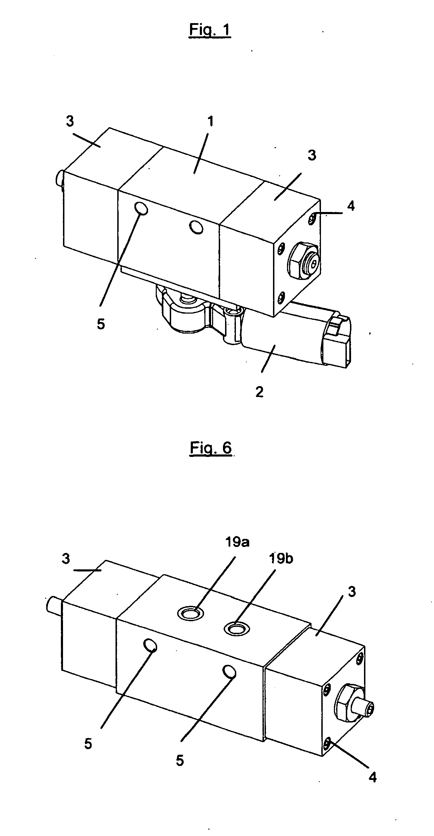

Die in Figur 1 dargestellte Förderpumpe ist durch ein Antriebsmodul 1, welchem ein Elektromotor 2 zugeordnet ist, und zwei Pumpenmodule 3 gebildet, die auf zwei einander gegenüberliegenden Seiten des Antriebsmoduls 1 befestigt sind. Die Pumpenmodule können beispielsweise zum Fördern von Öl, Schmierfett oder einem anderen geeigneten Schmierstoff ausgerüstet sein. Hierzu können die Pumpenelemente 3 mit in den Figuren nicht dargestellten Anschlüssen zur Verbindung mit einer Kartusche oder dergleichen für Schmierfett bzw. einem Vorratsbehälter für Öl ausgestattet sein. Weiter können Auslässe an den Pumpenmodulen 3 vorgesehen sein, welche über eine in den Figuren ebenfalls nicht dargestellte Schmierstoffleitung jeweils mit einer Schmierstelle in Verbindung stehen.

Wie in Figur 1 angedeutet, sind die beiden Pumpenmodule 3 jeweils über vier Schrauben 4 lösbar an dem Antriebsmodul 1 befestigt. Weiter sind an dem Antriebsmodul 1 zwei Befestigungsbohrungen ausgebildet, durch welche die gesamte Förderpumpe fixiert werden kann. Zur Ansteuerung des Elektromotors 2 kann diesem eine Steuerungs- und Regeleinheit zugeordnet werden.

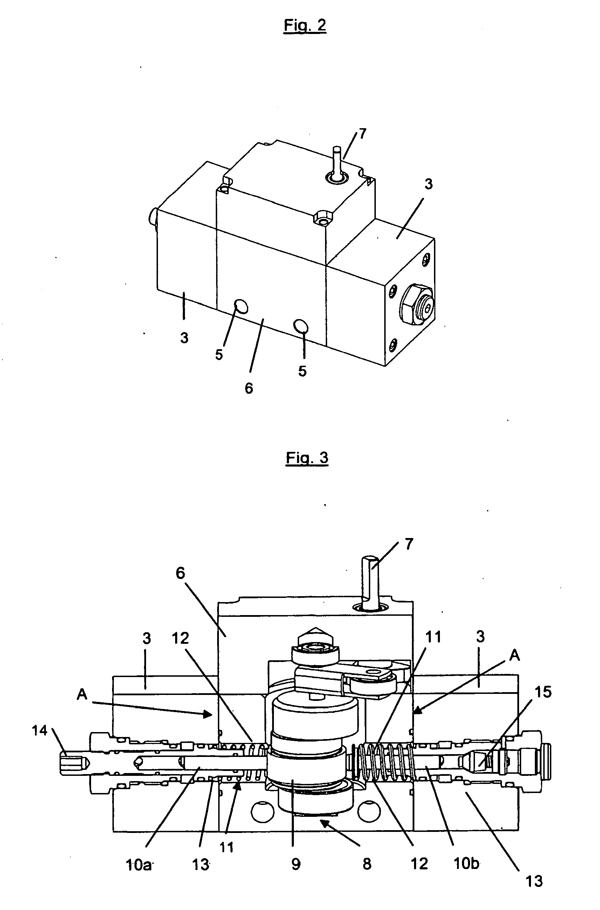

In den Figuren 2 und 3 ist eine weitere Ausführungsform einer Förderpumpe dargestellt, bei welcher zwei Pumpenmodule 3 auf einander gegenüberliegenden Seiten eines Antriebsmoduls 6 angeschlossen sind. Das Antriebsmodul 6 ist dabei nicht mit einem eigenen Antrieb versehen, sondern weist ein auf der Oberseite des Gehäuses aus diesem herausragendes Wellenende 7 auf, welches mit einem antreibenden Element verbindbar ist.

In dem Antriebsmodul 6 ist ein Rotations-Linear-Umsetzungsgetriebe mit einem exzentrisch auf einer in dem Antriebsmodul 6 gelagerten Welle angeordneten Kontaktrad 9 vorgesehen. Die Rotationsbewegung des Wellendes 7 wird auf diese Weise in eine lineare Bewegung von zwei Förderkolben 10a, 10b umgesetzt, welche in den beiden Pumpenmodulen 3 vorgesehen sind.

Den Förderkolben 10a, 10b ist dabei jeweils eine Feder 11 derart zugeordnet, dass die Kolben durch die Federkraft in Berührung mit dem exzentrischen Kontaktrad 9 gehalten werden. Bei einer Umdrehung des exzentrischen Kontaktrads 9 werden die beiden Förderkolben 10a und 10b somit abwechselnd gegen die Kraft der Druckfedern 11 in die jeweiligen Pumpenmodule 3 hinein verschoben. Durch diesen Kolbenhub der Förderkolben 10a, 10b wird ein Schmierstoff in an sich bekannter Weise aus einer Fettkartusche, einem Ölvorratsbehälter oder dergleichen zu einer Schmierstelle gefördert.

Wie aus der Darstellung der Figur 3 ersichtlich ist, ragen die beiden Förderkolben 10a und 10b durch Bohrungen 12 in das Antriebsmodul hinein, um mit dem Rotations-Linear-Umsetzungsgetriebe 8 in Kontakt zu stehen. Auch in den Pumpenmodulen 3 ist jeweils eine Bohrung 13 vorgesehen, in welcher die Kolbenanordnung mit den Förderkolben 10a bzw. 10b aufgenommen ist. Die Kolbenanordnung des in Figur 3 linken Förderkolbens 10a ist dabei durch eine Einstellschraube 14 einstellbar ausgebildet. Die Kolbenanordnung des in Figur 3 rechts angeordneten Pumpenmoduls ist dagegen nicht einstellbar ausgebildet. In dieser Kolbenanordnung des Förderkolbens 10b ist zudem ein Ventil 15 dargestellt.

Die einander zugewandten Flächen der Pumpenmodule 3 und des Antriebsmoduls 6 bilden Anschlussbereiche A, in denen die Bohrungen 11 bzw. 13 sowie die Bohrungen zur Aufnahme der Schrauben 4 angeordnet sind. Diese Bohrungen sind dabei derart in den Anschlussbereichen A angeordnet, dass die Pumpenmodule 3 leicht durch Entfernen der Schrauben 4 von dem Antriebsmodul 6 gelöst und durch andere Pumpenmodule ersetzt werden können. Durch die aufeinander abgestimmten Anschlussbereiche A ist der Austausch von Pumpenmodulen oder Antriebsmodulen leicht möglich.

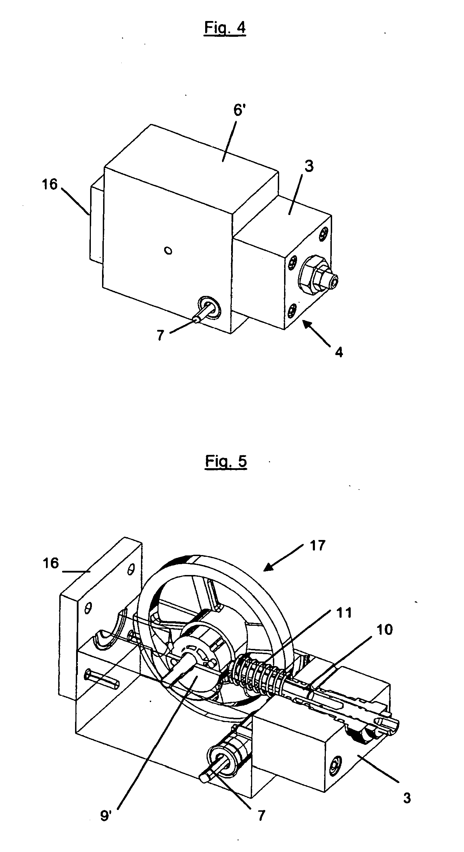

In den Figuren 4 und 5 ist eine weitere Ausführungsform einer Förderpumpe dargestellt, bei welcher das Antriebsmodul 6' ein freies Wellenende 7 aufweist, welches aus einer Seitenfläche des Gehäuses des Antriebsmoduls 6' zur Verbindung mit einem angetriebenen Element herausragt. An dem Antriebsmodul 6' ist dabei nur ein einzelnes Pumpenmodul 3 auf der in der Figur rechten Seite angebracht. Der gegenüberliegende Anschlussbereich A des Antriebsmoduls 6' ist durch einen Deckel 16 verschlossen.

In dem Antriebsmodul 6' ist, wie in Figur 5 dargestellt, ein Rotations-Linear-Umsetzungsgetriebe 17 angeordnet, welches eine Zahnradpaarung eines auf dem freien Wellenende 7 angeordneten ersten Zahnrads und eines auf einer weiteren Welle angeordneten zweiten Zahnrads aufweist. Dem zweiten Zahnrad ist dabei ein exzentrisches Kontaktrad 9' zugeordnet, an welchem der Förderkolben 10 durch die Kraft der Feder 11 anliegt.

Unter Bezugnahme auf die Figuren 6 bis 8 werden zwei weitere Ausführungsformen der erfindungsgemäßen Förderpumpe beschrieben, die ein Antriebsmodul 18 und zwei daran befestigte Pumpenmodule 3 aufweist. Das Antriebsmodul 18 ist mit zwei Anschlüssen 19a und 19b für die Zufuhr und/oder das Ablassen eines Hydraulikfluids oder beispielsweise Druckluft vorgesehen.

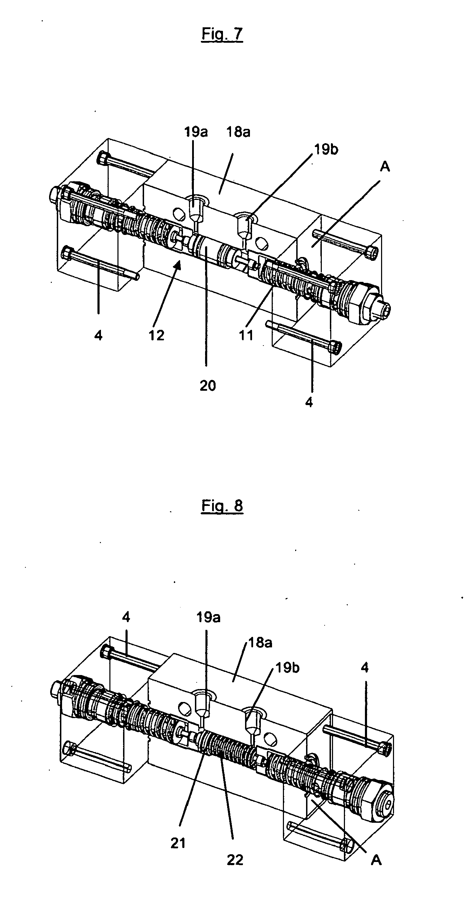

In der Ausführungsform nach Figur 7 ist in dem Antriebsmodul 18a ein doppelt wirkender Kolben 20 angeordnet, welcher in dem Antriebsmodul 18a durch Zufuhr und/oder Ablassen eines Fluids durch die Anschlüsse 19a und 19b in axialer Richtung hin und her bewegt werden kann. Hierdurch drückt der Kolben 20 abwechselnd einen der Förderkolben 10a bzw. 10b nach außen, um hierdurch einen Schmierstoff zu fördern.

In Figur 8 ist eine Ausführungsform dargestellt, bei welcher in dem Antriebsmodul 18b ein einfach wirkender Kolben 21 verschiebbar gelagert ist. Dem Kolben 21 ist dabei eine Druckfeder 22 zugeordnet, die den Kolben 21 in der Figur nach links beaufschlagt. Auf diese Weise wird wiederum durch Zufuhr bzw. Ablassen eines Fluids durch die Anschlüsse 19a und 19b der Kolben 21 abwechselnd nach links und rechts in der Figur verschoben, um dabei die mit diesem in Kontakt stehenden Förderkolben 10a bzw. 10b zu betätigen.

Bei den in den Figuren dargestellten Förderpumpen können die verschiedenen Antriebsmodule leicht gegeneinander ausgetauscht werden, da die Anschlussbereiche A der Antriebsmodule und der Pumpenmodule aneinander angepasst sind. Weiter ist es auch möglich, an einem Antriebsmodul die Anzahl der damit verbundenen Pumpenmodule und/oder die Bauart der Pumpenmodule, beispielsweise ein Pumpenmodul für die Förderung von Fett oder ein Pumpenmodul für die Förderung von Öl, gegeneinander auszutauschen. Die Austauschbarkeit der einzelnen Module gegeneinander ermöglicht zum Einen ein rasches Umrüsten von Förderpumpen, um diese an unterschiedliche Einsatzbedingungen anzupassen. Zum Anderen können auch für Wartungs- und Reparaturarbeiten einzelne Module leicht ausgewechselt werden.

### Bezugszeichen:

- 1: Antriebsmodul
- 2: Elektromotor
- 3: Pumpenmodul
- 4: Schraube
- 5: Befestigungsbohrung
- 6, 6': Antriebsmodul
- 7: freies Wellenende
- 8: Rotations-Linear-Umsetzungsgetriebe
- 9, 9': exzentrisches Kontaktrad
- 10, 10a, 10b: Förderkolben
- 11: Druckfeder
- 12: Bohrung
- 13: Bohrung
- 14: Einstellschraube
- 15: Ventil
- 16: Deckel
- 17: Rotations-Linear-Umsetzungsgetriebe
- 18, 18a, 18b: Antriebsmodul
- 19a, 19b: Anschluss
- 20: doppelt wirkender Kolben
- 21: Kolben
- 22: Feder

- A: Anschlussbereich

## Patentansprüche

1. Förderpumpe für die Zufuhr von Schmierstoff an wenigstens eine Schmierstelle, mit wenigstens einem Antriebsmodul (1, 6, 6', 18a, 18b) und wenigstens einem Pumpenmodul (3), wobei jedes Antriebsmodul (1, 6, 6', 18a, 18b) und jedes Pumpenmodul (3) aus einem modularen System gewählt ist, das mehrere Antriebsmodule und/oder mehrere Pumpenmodule umfasst, die jeweils wenigstens einen Anschlussbereich (A) aufweisen, wobei die Anschlussbereiche (A) derart aneinander angepasst sind, dass das wenigstens eine Antriebsmodul (1, 6, 6', 18a, 18b) gegen wenigstens ein weiteres Antriebsmodul und/oder das wenigstens eine Pumpenmodul (3) gegen wenigstens ein weiteres Pumpenmodul austauschbar ist.

2. Förderpumpe nach Anspruch 1, **dadurch gekennzeichnet, dass** die Anschlussbereiche (A) jeweils wenigstens eine Bohrung zur lösbaren Verbindung eines Antriebsmoduls (1, 6, 6', 18a, 18b) und eines Pumpenmoduls (3) über eine Verschraubung (4) aufweisen.

3. Förderpumpe nach Anspruch 1 oder 2, **dadurch gekennzeichnet, dass** die Anschlussbereiche (A) jeweils eine Bohrung (12, 13) zur Aufnahme und/oder Durchführung eines Kolbens (10, 10a, 10b) oder einer Kolbenanordnung aufweisen.

4. Förderpumpe nach einem der Ansprüche 1 bis 3, **dadurch gekennzeichnet, dass** die Anschlussbereiche (A) eine im Wesentlichen ebene Fläche bilden.

5. Förderpumpe nach einem der Ansprüche 1 bis 4, **dadurch gekennzeichnet, dass** zueinander passende Anschlussbereiche (A) im Wesentlichen die gleiche Größe und Gestalt haben.

6. Förderpumpe nach einem der Ansprüche 1 bis 5, **dadurch gekennzeichnet, dass** das Antriebsmodul (1) ein Rotations-Linear-Umsetzungsgetriebe (8, 17) und einen diesem zugeordneten Elektromotor (2) aufweist.

7. Förderpumpe nach Anspruch 6, **dadurch gekennzeichnet, dass** dem Elektromotor (2) eine Steuerungs- und/oder Regeleinheit zugeordnet ist.

8. Förderpumpe nach einem der Ansprüche 1 bis 7, **dadurch gekennzeichnet, dass** das Antriebsmodul (6, 6') ein Rotations-Linear-Umsetzungsgetriebe (8, 17) aufweist, welches über ein vorzugsweise aus dem Gehäuse des Antriebsmoduls herausragendes Wellenende (7) antreibbar ist.

9. Förderpumpe nach Anspruch 8, **dadurch gekennzeichnet, dass** das Rotations-Linear-Umsetzungsgetriebe (8, 17) einen in dem Antriebsmodul (6, 6') drehbar gelagerten Exzenter (9, 9') oder Nocken aufweist.

10. Förderpumpe nach einem der Ansprüche 1 bis 9, **dadurch gekennzeichnet, dass** das Antriebsmodul (18, 18a, 18b) eine hydraulisch und/oder pneumatisch antreibbare Kolbenanordnung (20, 21) aufweist.

11. Förderpumpe nach Anspruch 10, **dadurch gekennzeichnet, dass** die hydraulisch und/oder pneumatisch antreibbare Kolbenanordnung einen in dem Antriebsmodul (18a) verschiebbar geführten doppelt wirkenden Kolben (20) aufweist.

12. Förderpumpe nach Anspruch 10, **dadurch gekennzeichnet, dass** die hydraulisch und/oder pneumatisch antreibbare Kolbenanordnung einen in dem Antriebsmodul (18b) verschiebbar geführten Kolben (21) mit einer diesem zugeordneten Rückstellfeder (22) aufweist.

13. Förderpumpe nach einem der Ansprüche 1 bis 12, **dadurch gekennzeichnet, dass** das Pumpenmodul (3) einen verschiebbar gelagerten Förderkolben (10, 10a, 10b) aufweist, dem eine Rückstellfeder (11) zugeordnet ist.

14. Förderpumpe nach einem der Ansprüche 1 bis 13, **dadurch gekennzeichnet, dass** der Förderkolben (10, 10a, 10b) aus dem Anschlussbereich (A) des Pumpenmoduls (3) hervorsteht und in das Antriebsmodul (1,6,6', 18a, 18b) derart hinein ragt, dass der Förderkolben mit einem Antriebselement (9, 9', 20, 21) in dem Antriebsmodul in Kontakt steht.

15. Modulares Pumpensystem umfassend eine Förderpumpe nach einem der vorhergehenden Ansprüche, welches wenigstens zwei Antriebsmodule (1, 6, 6', 18a, 18b) und wenigstens ein Pumpenmodul (3) bzw. wenigstens ein Antriebsmodul (1,6,6', 18a, 18b) und wenigstens zwei Pumpenmodule (3) umfasst.

16. Modulares Pumpensystem nach Anspruch 15, **dadurch gekennzeichnet, dass** jedes Antriebsmodul (1, 6, 6', 18a, 18b) wenigstens zwei Anschlussbereiche (A) aufweist, an denen jeweils entweder ein Pumpenmodul (3) oder ein Deckel (16) befestigbar ist.

## Claims

1. A feed pump for supplying lubricant to at least one lubricating point, with at least one driving module (1, 6, 6', 18a, 18b) and at least one pump module (3), wherein each driving module (1, 6, 6', 18a, 18b) and each pump module (3) is selected from a modular system which comprises a plurality of driving modules and/or a plurality of pump modules which each have at least one connecting region (A), wherein the connecting regions (A) are matched to one another in such a manner that the at least one driving module (1, 6, 6', 18a, 18b) can be exchanged for at least one further driving module and/or the at least one pump module (3) can be exchanged for at least one further pump module.

2. The feed pump according to claim 1, **characterized in that** each of the connecting regions (A) have at least one bore hole for detachably connecting a driving module (1, 6, 6', 18a, 18b) and a pump module (3) by means of a screw connection (4).

3. The feed pump according to claim 1 or claim 2, **characterized in that** each of the connecting regions (A) have one bore hole (12, 13) for receiving and/or guiding a piston (10, 10a, 10b) or a piston arrangement.

4. The feed pump according to any one of the claims 1 to 3, **characterized in that** the connecting regions (A) form a substantially planar surface.

5. The feed pump according to any one of the claims 1 to 4, **characterized in that** connecting regions (A) which match to one another have a substantially identical size and shape.

6. The feed pump according to any one of the claims 1 to 5, **characterized in that** the driving module (1) has a rotation-linear-conversion gear (8, 17) and an electric motor (2) allocated to the same.

7. The feed pump according to claim 6, **characterized in that** a control and/or regulating unit is allocated to the electric motor (2).

8. The feed pump according to any one of the claims 1 to 7, **characterized in that** the driving module (6, 6') has a rotation-linear-conversion gear (8, 17) which can be driven by a shaft end (7) preferably projecting out of the housing of the driving module.

9. The feed pump according to claim 8, **characterized in that** the rotation-linear-conversion gear (8, 17) has an eccentric (9, 9') or cam rotatably mounted in the driving module (6, 6').

10. The feed pump according to any one of the claims 1 to 9, **characterized in that** the driving module (18, 18a, 18b) has a piston arrangement (20, 21) which can be driven hydraulically and/or pneumatically.

11. The feed pump according to claim 10, **characterized in that** the hydraulically and/or pneumatically drivable piston arrangement has a double-acting piston (20) which is displaceably guided in the driving module (18a).

12. The feed pump according to claim 10, **characterized in that** the hydraulically and/or pneumatically drivable piston arrangement has a piston (21) which is displaceably guided in the driving module (18b) and to which a return spring (22) is allocated.

13. The feed pump according to any one of the claims 1 to 12, **characterized in that** the pump module (3) has a displaceably mounted feed piston (10, 10a, 10b) to which a return spring (11) is allocated.

14. The feed pump according to any one of the claims 1 to 13, **characterized in that** the feed piston (10, 10a, 10b) projects out of the connecting region (A) of the pump module (3) and projects into the driving module (1, 6, 6', 18a, 18b) in such a manner that the feed piston is in contact with a driving element (9, 9', 20, 21) within the driving module.

15. A modular pump system comprising a feed pump according to any one of the preceding claims, which system comprises at least two driving modules (1, 6, 6', 18a, 18b) and at least one pump module (3), or at least one driving module (1, 6, 6', 18a, 18b) and at least two pump modules (3).

16. The modular pump system according to claim 15, **characterized in that** each of the driving modules (1, 6, 6', 18a, 18b) has at least two connecting regions (A) to each of which one pump module (3) or one cover (16) can be fastened.

## Revendications

1. Pompe d'alimentation pour l'arrivée de lubrifiant à au moins un point de graissage, comprenant au moins un module d'entraînement (1, 6, 6', 18a, 18b) et au moins un module de pompe (3), chaque module d'entraînement (1, 6, 6', 18a, 18b) et chaque module de pompe (3) étant choisis à partir d'un système modulaire, lequel comprend plusieurs modules d'entraînement et/ou plusieurs modules de pompe, qui présentent chacun au moins une zone de raccordement (A), les zones de raccordement (A) étant adaptées les unes aux autres de telle sorte que le au moins module d'entraînement (1, 6, 6', 18a, 18b) peut être remplacé par au moins un autre module d'entraînement et/ou le au moins un module de pompe (3) peut être remplacé par au moins un autre module de pompe.

2. Pompe d'alimentation selon la revendication 1, **caractérisée en ce que** les zones de raccordement (A) présentent chacune au moins un alésage pour la liaison amovible d'un module d'entraînement (1, 6, 6', 18a, 18b) et d'un module de pompe (3) au moyen d'un assemblage vissé (4).

3. Pompe d'alimentation selon la revendication 1 ou 2, **caractérisée en ce que** les zones de raccordement (A) présentent chacune un perçage (12, 13) pour le logement et/ou le passage d'un piston (10, 10a, 10b) ou d'un agencement de piston.

4. Pompe d'alimentation selon l'une quelconque des revendications 1 à 3, **caractérisée en ce que** les zones de raccordement (A) forment une surface sensiblement plane.

5. Pompe d'alimentation selon l'une quelconque des revendications 1 à 4, **caractérisée en ce que** des zones de raccordement (A) adaptées les unes aux autres ont sensiblement la même grandeur et la même forme.

6. Pompe d'alimentation selon l'une quelconque des revendications 1 à 5, **caractérisée en ce que** le module d'entraînement (1) présente un mécanisme de conversion rotation-linéaire (8, 17) et un moteur électrique (2) attribué à ce mécanisme.

7. Pompe d'alimentation selon la revendication 6, **caractérisée en ce qu'**une unité de commande et/ou de réglage est attribuée au moteur électrique (2).

8. Pompe d'alimentation selon l'une quelconque des revendications 1 à 7, **caractérisée en ce que** le module d'entraînement (6, 6') présente un mécanisme de conversion rotation-linéaire (8, 17) qui peut être entraîné au moyen d'une extrémité d'arbre (7) dépassant de préférence du carter du module d'entraînement.

9. Pompe d'alimentation selon la revendication 8, **caractérisée en ce que** le mécanisme de conversion rotation-linéaire (8, 17) présente un excentrique (9, 9') ou une came logé(e) de façon rotative dans le module d'entraînement (6, 6').

10. Pompe d'alimentation selon l'une quelconque des revendications 1 à 9, **caractérisée en ce que** le module d'entraînement (18, 18a, 18b) présente un agencement de piston (20, 21) pouvant être entraîné de façon hydraulique et/ou pneumatique.

11. Pompe d'alimentation selon la revendication 10, **caractérisée en ce que** l'agencement de piston pouvant être entraîné de façon hydraulique et/ou pneumatique, présente un piston (20) à double effet guidé de façon coulissante dans le module d'entraînement (18a).

12. Pompe d'alimentation selon la revendication 10, **caractérisée en ce que** l'agencement de piston pouvant être entraîné de façon hydraulique et/ou pneumatique, présente un piston (21) guidé de façon coulissante dans le module d'entraînement (18b) avec un ressort de rappel (22) attribué à celui-ci.

13. Pompe d'alimentation selon l'une quelconque des revendications 1 à 12, **caractérisée en ce que** le module de pompe (3) présente un piston de transport (10, 10a, 10b) logé de façon coulissante auquel est attribué un ressort de rappel (11).

14. Pompe d'alimentation selon l'une quelconque des revendications 1 à 13, **caractérisée en ce que** le piston de transport (10, 10a, 10b) dépasse de la zone de raccordement (A) du module de pompe (3) et dépasse à l'intérieur du module d'entraînement (1, 6, 6', 18a, 18b) pour que le piston de transport soit en contact avec un élément d'entraînement (9, 9', 20, 21) dans le module d'entraînement.

15. Système de pompe modulaire comprenant une pompe d'alimentation selon l'une quelconque des revendications précédentes, lequel comporte au moins deux modules d'entraînement (1, 6, 6', 18a, 18b) et au moins un module de pompe (3) ou au moins un module d'entraînement (1, 6, 6', 18a, 18b) et au moins deux modules de pompe (3).

16. Système de pompe modulaire selon la revendication 15, **caractérisé en ce que** chaque module d'entraînement (1, 6, 6', 18a, 18b) présente au moins deux zones de raccordement (A), sur chacune desquelles soit un module de pompe (3) soit un couvercle (16) peut être fixé.
